# EUROPÄISCHE PATENTSCHRIFT

(11) **EP 1 421 563 B1**
(45) Veröffentlichungstag und Bekanntmachung des Hinweises auf die Patenterteilung: **02.11.2005**
(21) Anmeldenummer: 02797580.4
(22) Anmeldetag: 16.08.2002
(51) Int. Cl.: G07F 7/00

(54) **VORRICHTUNG ZUM ABGEBEN UND ENTNEHMEN VON WÄSCHESTÜCKEN**
DEVICE FOR THE DELIVERY AND RECEIPT OF ITEMS OF WASHING
DISPOSITIF D'EMISSION ET DE PRELEVEMENT DE PIECES DE LINGE

(30) Priorität: 22.08.2001 DE 20113863 U
(43) Veröffentlichungstag der Anmeldung: 26.05.2004
(73) Patentinhaber: Lara GmbH, 40599 Düsseldorf (DE)
(72) Erfinder: MICHELS, Lothar, 50181 Bedburg (DE); BÖTTGES, Günter, 41352 Korschenbroich (DE)
(74) Vertreter: Grünecker, Kinkeldey, Stockmair & Schwanhäusser Anwaltssozietät
(86) Internationale Anmeldenummer: PCT/EP2002/009180
(87) Internationale Veröffentlichungsnummer: WO 2003/021540

(56) Entgegenhaltungen:
- WO-A-99/35322
- DE-A- 2 549 024
- DE-A- 3 236 997
- US-A- 3 840 103
- US-A- 4 550 246
- US-A- 4 991 719
- US-A- 5 072 822
- US-A- 5 125 513

## Beschreibung

Die vorliegende betrifft eine Vorrichtung zum Abgeben und Entnehmen von Wäschestücken mit einer Abgabestation für zu reinigende Wäschestücke mit einer verschließbaren Abgabeöffnung, der eine Dateneingabeeinrichtung zur Eingabe eines Reinigungsauftrages zugeordnet ist, einer Entnahmeöffnung für gereinigte Wäschestücke mit einer verschließbaren Entnahmeöffnung, die die Entnahme von auf einer Hauptspeichereinrichtung abgelegten Wäschestücken ermöglicht, wobei der Entnahmeeinrichtung eine Auftragsidentifikationseinrichtung zugeordnet ist, und mit einem Prozessor, welcher mit der Dateneingabeeinrichtung und der Auftragsidentifikationseinrichtung verbunden ist. Eine derartige Vorrichtung ist aus der US-4,803,348 bekannt und dient der Abgabe von zu reinigenden Wäschestücken und der Abholung durch den Kunden unabhängig von eventuellen Ladenöffnungszeiten. An der Abgabestation kann ein Kunde zu reinigende Wäschestücke durch die sich öffnende Abgabeöffnung abgeben. Üblicher Weise hat der Kunde hierzu eine Kundenkarte. Es ist jedoch auch denkbar, jedem beliebigen Kunden bei Abgabe von Wäschestücken über Vorauszahlung, beispielsweise Abbuchungsauftrag oder Münzeingabe bzw. Paycard einen Beleg an der Abgabestation auszugeben, durch welchen bei der Abholung die Auftragsidentifikation mittels der Auftragsidentifikationseinrichtung erfolgt.

Die Hauptspeichereinrichtung kann beispielsweise durch ein umlaufendes Band oder aber durch eine Speicherschiene gebildet sein, wie sie aus der US-5,509,572 bekannt ist. Dort erfolgt der Zugriff auf die Hauptspeichereinrichtung über einen Transporter, welcher einen ausgewählten Reinigungsauftrag zu der Entnahmeöffnung verbringt. Die Identifikation eines Kundenauftrages erfolgt über die Auftragsidentifizierungseinrichtung. Hierbei kann ein Kunde den vorerwähnten Beleg einlesen lassen. Alternativ erfolgt die Autorisierung über eine Kundenkarte oder aber über die Eingabe einer nur dem Kunden bekannten Auftragsnummer. Im Fall einer Kundenkarte kann die Auftragsidentifizierungseinrichtung ein entsprechendes kundenspezifisches Signal der Karte einlesen und an den Prozessor weiterleiten, so dass sämtliche fertiggestellten Aufträge dieses Kunden zur Abholung an der Entnahmestation bereitgestellt werden. An der Entnahmestation sind regelmäßig Vorkehrungen getroffen, die es dem Kunden erlauben, auf seinen eigenen Reinigungsauftrag zuzugreifen, nicht aber auf den Reinigungsauftrag anderer Kunden.

Im Stand der Technik werden die einzelnen Wäschestücke eines Reinigungsauftrages an unterschiedlichen Stellen an der Hauptspeichereinrichtung abgelegt. Beim Abholen des Reinigungsauftrages werden diese Wäschestücke einzeln an der Entnahmeöffnung bereitgestellt. Jedes einzelne Wäschestück eines Reinigungsauftrages wird üblicher Weise verpackt. Dies erfordert einen erheblichen Verpackungsaufwand. Darüber hinaus stellt sich die Abholung mehrerer Wäschestücke zu einem Reinigungsauftrag des Kunden als recht zeitintensiv dar.

Die US 5 072 822 A zeigt eine Einrichtung zur Sortierung von gereinigten Wäschstücken mit einer Wäscheabgabe und Entnahmeeinheit. Gereinigte Wäschestücke können in beliebiger Reihenfolge auf einen Beschickungsstrang aufgegeben werden und bei entsprechender Abfrage an einem Prozessor in vorbestimmter Weise an einer Trennstation ausgegeben werden. Die Ausgabe kann hierbei nach der Art der Wäschestücke bzw. nach Kunden- oder Mitarbeiterzugehörigkeit erfolgen.

Der vorliegenden Erfindung liegt das Problem zugrunde, eine Vorrichtung der eingangs genannten Art derart weiterzubilden, dass die Abholzeit verkürzt wird.

Zur Lösung dieses Problems wird mit der vorliegenden Erfindung eine Vorrichtung zum Abgeben und Entnehmen von Wäschestücken mit den Merkmalen von Anspruch 1 vorgeschlagen. Diese unterscheidet sich vom gattungsbildenden Stand der Technik durch eine Zwischenablage mit Aufnahmeplätzen für jeweils eines der gereinigten Wäschestücke und einer Kommissioniereinrichtung, die eine auf die Zwischenablage zugreifende Handhabe aufweist und mit welcher einzelne gereinigte Wäschestücke von der Zwischenablage zu der Kommissioniereinrichtung überführbar sind. Während im Stand der Technik die einzelnen gereinigten Wäschestücke auf jeweils einem separaten Bereithalteplatz auf der Hauptspeichereinrichtung abgelegt sind, hat die erfindungsgemäße Vorrichtung eine Zwischenablage, in welcher einzelne Wäschestücke auf einzelnen Aufnahmeplätzen in beliebiger Reihenfolge abgelegt werden. Die erfindungsgemäße Vorrichtung hat ferner eine Handhabe, durch welche die auf der Zwischenablage abgelegten gereinigten Wäschestücke selektiv von der Zwischenablage entnommen und auf eine Kommissioniereinrichtung überführt werden können. In der Kommissioniereinrichtung werden danach mehrere, vorzugsweise sämtliche Kleidungsstücke eines einzigen Reinigungsauftrages zusammengeführt. Von dort aus erfolgt die Ablage auf die Hauptspeichereinrichtung. Bei der erfindungsgemäßen Vorrichtung ist es danach möglich, mehr als ein Wäschestück eines Reinigungsauftrages an einem Bereithalteplatz der Hauptspeichereinrichtung abzulegen. Hierdurch wird die Abholzeit für den Kunden verringert.

Im Hinblick auf eine eindeutige Zuordnung einzelner Aufnahmeplätze zu bestimmten gereinigten Wäschestücken auf der Zwischenablage wird gemäß einer bevorzugten Weiterbildung der vorliegenden Erfindung vorgeschlagen, dass die Zwischenablage ein umlaufendes Speicherband mit einer Vielzahl von in Umlaufrichtung hintereinander angeordneten Aufnahmeplätzen hat, eine Überwachungseinrichtung, welche beim Umlaufen des Speicherbandes eine Plausibilitätsführung durchführt, bei welcher die Aufnahmeplätze des Speicherbandes gezählt und der ermittelte Wert mit einem hinterlegten Referenzwert verglichen wird und ferner eine Belegungsprüfeinrichtung, welche die Belegung der Aufnahmeplätze prüft und mit einem hinterlegten Belegungsmuster vergleicht. Ferner weist die Zwischenablage eine Kleidungsstückerkennungseinrichtung auf, mit welcher ein auf die Zwischenablage abzulegendes Kleidungsstück erkennbar ist, wobei die Überwachungseinrichtung, die Belegungsprüfeinrichtung und die Kleidungsstückerkennungseinrichtung derart zusammenwirken, dass ein von der Kleidungsstückerkennungseinrichtung erzeugtes kleidungsspezifisches Signal einem bestimmten Aufnahmeplatz der Zwischenablage zugeordnet wird. Diese Weiterbildung der erfindungsgemäßen Vorrichtung erlaubt eine relativ einfache Handhabung, d.h. ein relativ einfaches Ablegen einzelner gereinigter Kleidungsstücke auf die erkannten Aufnahmeplätze des Speicherbandes. Es ist beim Ablegen nicht erforderlich, ein einzelnes Kleidungsstück zu identifizieren, die Identifikation des Kleidungsstückes einzugeben, die Identifikation eines entsprechenden Aufnahmeplatzes einzugeben, um letztlich diejenigen Informationen separat einzugeben, die dem Prozessor eine Zuordnung eines bestimmten Kleidungsstückes zu einem bestimmten Aufnahmeplatz ermöglichen.

Bei der bevorzugten Weiterbildung der vorliegenden Erfindung muss vielmehr lediglich eine Kleidungsstückerkennung durchgeführt werden. Dies kann beispielsweise durch Erfassen eines mit dem Kleidungsstück verbundenen bzw. eines dem Kleidungsstück zugeordneten Identifikationsmittels geschehen. Ein Identifikationsmittel kann fest mit dem Kleidungsstück von Stammkunden verbunden sein. Ein Identifikationsmittel kann aber auch aus einem Etikett bestehen, welches bei der Abgabe der Wäschestücke aufgrund der Eingabe des Reinigungsauftrages von einem Etikettendrucker erzeugt und dem Reinigungsauftrag beigefügt wird. Ein derartiges Etikett hat vorzugsweise einen Barcode und die Kleidungsstückerkennungseinrichtung ist durch einen Scanner gebildet.

Bei der bevorzugten Weiterbildung der erfindungsgemäßen Vorrichtung ergibt der von der Belegungsprüfeinrichtung durchgeführte Vergleich zwischen dem hinterlegten Belegungsmuster und der erneuten Überprüfung der Belegung von Aufnahmeplätzen, dass ein weiteres Wäschestück abgelegt worden ist. Die genaue Lage des Aufnahmeplatzes dieses Wäschestückes ergibt sich ebenfalls durch das von der Überwachungseinrichtung erzeugte Signal. Die Überwachungseinrichtung zählt sämtliche Ablageplätze des Speicherbandes und überprüft das durch Zählen ermittelte Ergebnis mit einem hinterlegten Referenzwert. Hierdurch können Zählfehler ausgeschlossen werden. Ein auf dem Speicherband angebrachter und mit diesem umlaufender Indikator kann der Überwachungseinrichtung ferner eine Nulllage des umlaufenden Speicherbandes angeben. Alternativ kann die Überwachungseinrichtung auch auf einen hinterlegten Referenzwert zurückgreifen, um dem von der Belegungsprüfeinrichtung abgegebenen Signal eine bestimmte örtliche Information, d.h. eine bestimmte Zwischenablage zuzuordnen. Zusammen mit dem Signal der Kleidungsstückerkennungseinrichtung werden durch den Prozessor die Informationen derart aufbereitet, dass einem bestimmten gereinigten Kleidungsstück ein bestimmter Platz auf dem Speicherband zugeordnet werden kann.

Wie vorstehend bereits erwähnt, kann die Überwachungseinrichtung einen die Nulllage des Speicherbandes erkennenden Sensor aufweisen. Die Anzahl der Aufnahmeplätze wird vorzugsweise durch einen das Vorhandensein eines Aufnahmeplatzes erkennenden Sensors bewirkt. Im Hinblick auf eine möglichst einfache und dauerhafte Ausgestaltung wird gemäß einer bevorzugten Weiterbildung der vorliegenden Erfindung vorgeschlagen, dass der die Nulllage erkennende Sensor sowie der das Vorhandensein eines Aufnahmeplatzes erkennende Sensor ein berührungsfreier Sensor ist. Vorzugsweise sind es optische Sensoren.

Im Gegensatz hierzu hat es sich zur fehlerfreien Erkennung der Belegung eines Aufnahmeplatzes mit Üblicher Weise an Kleiderbügeln hängenden Wäschestücken als vorteilhaft erwiesen, das Vorhandensein eines Kleiderbügels in dem Aufnahmeplatz mechanisch zu erfassen. Hierbei kann der in einem Aufnahmeplatz aufgenommene Kleiderbügel beispielsweise in der Belegungsprüfeinrichtung über eine Rampe zunächst hochgeschoben und dann an einer Klinke, Zahnrad oder dergleichen vorbeigeführt werden. Dort wird das Vorhandensein eines Kleiderbügels festgestellt und ein entsprechendes Signal wird an den Prozessor abgegeben. Eine derartige Ausgestaltung der Belegungsprüfeinrichtung verhindert die Abgabe eines die Belegung angebenden Signales lediglich bei einer Verlegung des Aufnahmeplatzes beispielsweise durch eine Etikett oder Teile des Kleidungsstückes eines benachbarten Aufnahmeplatzes.

Im Hinblick auf eine möglichst kurze Zugriffszeit des Benutzers auf sämtliche Wäschestücke eines Reinigungsauftrages wäre es naheliegend, sämtliche Reinigungsstücke auf einen einzigen Bereithalteplatz der Hauptspeichereinrichtung abzulegen. Dies kann jedoch einerseits zu einer Überlastung führen. Andererseits müssten benachbarte Bereithalteplätze zur Schaffung eines recht großen Aufnahmebereiches sehr weit voneinander entfernt sein. Hierdurch würde die Effizienz und die Lagerkapazität der Hauptspeichereinrichtung insgesamt verschlechtert. Die bevorzugte Weiterbildung gemäß Anspruch 6 schafft hier Abhilfe dadurch, dass zum Einen dem Prozessor ein Speicher zugeordnet ist, in dem Belegungsbreiten für einzelne Wäschestückarten hinterlegt sind. Die Kommissioniereinrichtung weist zum Anderen mehrere Kommissionierablagen für gereinigte Wäschestücke auf. Der Prozessor wirkt derart mit der Handhabe zusammen, dass einzelne Wäschestücke eines Reinigungsauftrages für die Ablage in einer einzigen Kommissionierablage unter Berücksichtigung der jeweiligen Belegungsbreiten der Einzelstücke so ausgewählt werden, dass in der Kommissionierablage möglichst viele Wäschestücke jedoch nur bis zum Erreichen einer maximalen Ablagebreite abgelegt werden. Die maximale Ablagebreite wird durch den seitlichen Abstand der Bereithalteplätze auf der Hauptspeichereinrichtung vorbestimmt, ist aber in dem Speicher variabel zu hinterlegen.

Beim Zusammenstellen der gereinigten Wäschestücke zur Abholung auf der Hauptspeichereinrichtung werden danach sämtliche gereinigte Wäschestücke eines Reinigungsauftrages von der Zwischenablage auf die Kommissioniereinrichtung überführt. Der Prozessor überwacht, dass bei Belegung der ersten Kommissionierablage zunächst die Summe der Belegungsbreiten der dort abgelegten Wäschestücke die vorgegebene maximale Ablagebreite nicht überschreitet.

Die Kommissionierablagen sind vorzugsweise auf einem umlaufenden Band ausgebildet. Nachdem die maximale Ablagebreite allerhöchstens erreicht worden ist, wird regelmäßig die erste Kommissionierablage bewegt und eine weitere, unbelegte Kommissionierablage zur Beschickung durch die Handhabe bereitgestellt. Die Handhabe kann beispielsweise durch eine auf das Speicherband verschwenkbare Weiche gebildet sein, durch welche der in dem jeweiligen Aufnahmeplatz aufgenommene Kleiderbügel von dem Aufnahmeplatz entnommen, auf die Weiche aufgeschoben und von dort auf die Kommissionierablage verbracht wird.

Gemäß einer bevorzugten Weiterbildung weist die erfindungsgemäße Vorrichtung eine der Kommissioniereinrichtung nachgeordnete Verpackungseinrichtung auf. In dieser werden die auf einer einzigen Kommissionierablage zu einer Verpackungseinrichtung zusammengestellten Einzelstücke verpackt, regelmäßig durch Überziehen einer Schlauchfolie, welche in der Verpackungseinrichtung bereitgehalten und zugeführt wird, umhüllt. Der Verpackungseinrichtung ist eine Beschickungseinrichtung nachgeordnet. Diese Beschickungseinrichtung überführt die Verpackungseinheit zu der Hauptspeichereinrichtung. Der Prozessor wirkt derart auf die Hauptspeichereinrichtung ein, dass zunächst vor dem Überführen der ersten Verpackungseinheit eines Reinigungsauftrages ein Abschnitt der Hauptspeichereinrichtung an der Beschickungseinrichtung bereitgestellt wird, welcher ein Ablegen sämtlicher Verpackungseinheiten zu einem Reinigungsauftrag in unmittelbarer räumlicher Nähe auf der Hauptspeichereinrichtung erlaubt. Vorzugsweise werden sämtliche Verpackungseinheiten eines Reinigungsauftrages auf unmittelbar benachbart zueinander angeordneten Bereithalteplätzen der Hauptspeichereinrichtung abgelegt. Für den Fall, dass die Hauptspeichereinrichtung durch ein umlaufendes Hauptspeicherband gebildet ist, welches unmittelbar an der Entnahmeöffnung der Entnahmestation vorbeigeführt wird, kann in diesem Fall die Entnahmeöffnung beim Weiterbewegen des Hauptspeicherbandes so lange geöffnet bleiben, bis die letzte Verpackungseinrichtung des Reinigungsauftrages von dem Kunden entnommen worden ist. Hierdurch wird eine minimale Entnahmezeit ermöglicht.

Eine weitere Verringerung der Entnahmezeit wird gemäß einer bevorzugten Weiterbildung dadurch geschaffen, dass der Prozessor derart auf die Hauptspeichereinrichtung einwirkt, dass ein Abschnitt der Hauptspeichereinrichtung an der Beschickungseinrichtung bereitgestellt wird, der in unmittelbarer räumlicher Nähe zu einem Bereich der Hauptspeichereinrichtung befindlich ist, auf dem bereits ein Reinigungsauftrag desselben Kunden abgelegt ist. Mit anderen Worten prüft der Prozessor nicht nur die Freiplätze auf der Hauptspeichereinrichtung, sondern prüft auch das Vorhandensein weiterer Kundenaufträge ab und ordnet den auf der Beschickungseinrichtung befindlichen Reinigungsauftrag einem Bereich zu, der in räumlicher Nähe zu den übrigen Reinigungsaufträgen des Kunden auf der Hauptspeichereinrichtung befindlich ist. Die Zuordnung einzelner Verpackungseinheiten zu einzelnen Bereithalteplätzen auf der Hauptspeichereinrichtung kann in gleicher Weise erfolgen, wie dies vorstehend mit Bezug auf die Zwischenablage beschrieben worden ist.

Schließlich wird gemäß einer weiteren bevorzugten Ausgestaltung der vorliegenden Erfindung vorgeschlagen, eine der Beschickungseinrichtung zugeordnete Spreizeinrichtung vorzusehen. Durch diese Spreizeinrichtung werden benachbart zu einem zu belegenden Bereithalteplatz angeordnete Wäschestücke auseinandergedrückt, so dass die von der Beschickungseinrichtung zugeführte Verpackungseinheit auf den freien Bereithalteplatz abhängt werden kann und sich dort frei aushängen kann, bevor die benachbarten Wäschestücke seitlich gegen diese zugeführte Verpackungseinheit drücken.

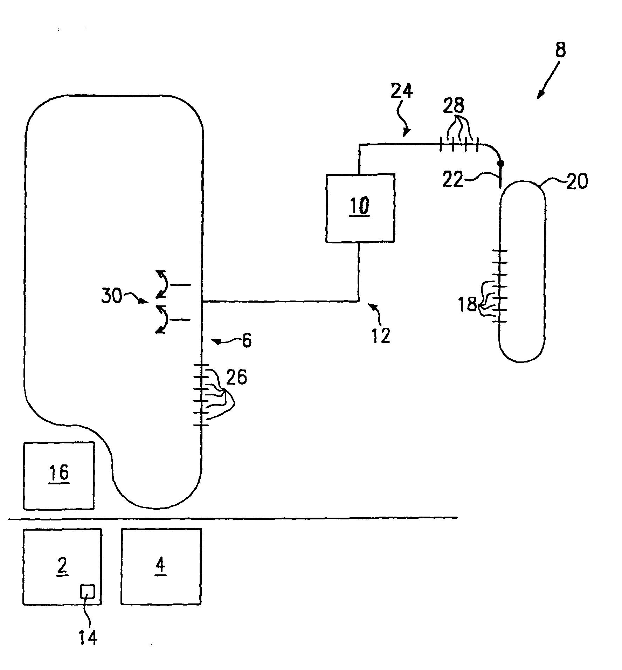

Die Erfindung wird nachfolgend anhand eines Ausführungsbeispiels in Verbindung mit der Zeichnung näher erläutert.

In der Zeichnung ist ein Ausführungsbeispiel der erfindungsgemäßen Vorrichtung schematisch dargestellt. Gezeigt ist eine Abgabestation 2, eine Entnahmestation 4 sowie eine als umlaufendes Band ausgebildete Hauptspeichereinrichtung 6. Zu sehen ist ferner eine schematisch dargestellte Zwischenablage 8. Zwischen dieser Zwischenablage 8 und dem Hauptspeicherband 6 befindet sich eine Verpackungseinrichtung 10 und eine Beschickungseinrichtung 12.

Bei dem gezeigten Ausführungsbeispiel tritt zunächst ein Kunde mit seinem Reinigungsauftrag umfassend eine Vielzahl von Wäschestücken an die Abgabestation 2. Bei dem gezeigten Ausführungsbeispiel umfasst eine Dateneingabeeinrichtung 14 einen Kartenleser. Durch diesen Kartenleser wird der Kunde an der Abgabestation 2 identifiziert. Er gibt dann anhand von vorbestimmten Auswahlfeldern zu bestimmten Kleidungsstückenarten seinen Reinigungsauftrag ein. Ein der Abgabestation 2 zugeordneter Etikettendrucker druckt Barcode-Kennungen entsprechend der Anzahl der abgegebenen Wäschestücke aus. Die Barcode-Kennung zu jedem einzelnen Wäschestück des Reinigungsauftrages enthält Informationen zu der Art des Kleidungsstückes, dem Reinigungsauftrag sowie kundenspezifische Informationen.

Der Kunde gibt die Wäschestücke des Reinigungsauftrages zusammen mit den ausgedruckten Barcode-Kennungen in einen an der Abgabestation 2 bereitgehaltenen Beutel und wirft diesen Beutel durch die geöffnete Abgabeöffnung ein. Dort werden die abgegebenen Wäschestücke in einer Wanne 16 gesammelt.

Die abgegebenen Wäschestücke werden von dem Personal aus dem Beutel entnommen. Jedem einzelnen Wäschestück wird eine Barcode-Kennung zugeordnet. Die Wäschestücke durchlaufen dann die jeweils von dem Kunden beauftragte Reinigungs-und/oder Waschbehandlung und werden schließlich auf einzelne Aufnahmeplätze 18 eines umlaufenden Speicherbandes 20 der Zwischenablage 8 überführt. Die Ankunft der einzelnen Wäschestücke eines Reinigungsauftrages an der Zwischenablage ist abhängig von der Verweilzeit in der Reinigungs- bzw. Waschstrecke. Üblicher Weise werden die einzelnen Kleidungsstücke zeitlich versetzt zu der Zwischenablage 8 gelangen. Die Barcode-Kennung jedes einzelnen Wäschestückes wird bei der Ankunft des Wäschestückes an der Zwischenablage 8 eingelesen. Ein bei der Abgabe des Reinigungsauftrages über die Dateneingabeeinrichtung 14 informierter Prozessor erhält nunmehr die Information, dass das bestimmte Reinigungsstück dieses Reinigungsauftrages den gewünschten Reinigungs- bzw. Waschauftrag durchlaufen hat. Eine hier nicht dargestellte Überwachungseinrichtung sowie eine Belegungsprüfungseinrichtung liefert dem Prozessor ferner die Information, an welchem Aufnahmeplatz 18 sich das bestimmte Wäschestück befindet. Der Prozessor überwacht das Eingehen sämtlicher Wäschestücke in der Zwischenablage 8. Sofern alle Wäschestücke eines Reinigungsauftrages in der Zwischenablage 8 abgelegt sind, erfolgt die Überführung der Wäschestücke zu dem Hauptspeicherband 6 . Dabei wird das Speicherband 20 umlaufend bewegt. Sofern der Aufnahmeplatz eines vorbestimmten Wäschestückes des Reinigungsauftrages eine Weiche 22 passiert, wird diese durch den Prozessor angeregt und nimmt das auf einem Kleiderbügel hängende Wäschestück auf. Von der Weiche 22 wird das Wäschestück auf eine Kommissioniereinrichtung 24 überführt.

Zu jedem Wäschestück des Reinigungsauftrages sind in einem Speicher des Prozessors Belegungsbreiten hinterlegt. Diese Belegungsbreiten sind vorzugsweise prozentual zu einer maximalen Ablagebreite an einem Bereithalteplatz 26 des Hauptspeicherbandes 6 abgelegt. Ein Hemd wird beispielsweise mit einer Belegungsbreite von 30% der maximalen Ablagebreite geführt. Ein Wintermantel mit 100%. Beim Überführen der einzelnen gereinigten Wäschestücke von dem Speicherband 20 auf die Kommissioniereinrichtung 24 wird von dem Prozessor zunächst die bestmögliche Belegung der maximalen Ablagebreite ermittelt. Umfasst der Reinigungsauftrag beispielsweise fünf Hemden und einen Wintermantel, so werden zunächst drei Hemden von dem Speicherband 20 auf die Kommissioniereinrichtung überführt. Die Kommissioniereinrichtung 24 ist durch ein umlaufendes Band gebildet, das in Sektionen unterteilt ist. Jede einzelne Sektion bildet eine Kommissionierablage 28. Nachdem die drei Hemden auf einer ersten Kommissionierablage 28 Platz gefunden haben, wird das umlaufende Band der Kommissioniereinrichtung weiterbewegt. Eine freie weitere Kommissionierablage 28 wird benachbart zu der Weiche 22 bereitgestellt. Dann erfolgt das Überführen des Wintermantels auf die freie Kommissionierablage 28. Das Band der Kommissioniereinrichtung 24 wird weiterbewegt. Eine dritte freie Kommissionierablage 28 wird an der Weiche 22 bereitgestellt. Nun erfolgt das Überführen der beiden letzten Hemden auf eine freie Kommissionierablage 28. Zur genauen und fehlerfreien Überführung eines gereinigten Kleidungsstückes auf die Kommissioniereinrichtung 24 wird die Geschwindigkeit des Speicherbandes 20 reduziert, wenn sich der entsprechende Aufnahmeplatz 18 der Weiche 22 nähert.

Von der Kommissioniereinrichtung 24 werden die auf einer einzigen Kommissionierablage zusammengestellten Kleidungsstücke an die Verpackungseinrichtung 10 überführt. Dort erfolgt das Umhüllen der auf einer einzigen Kommissionierablage zusammengestellten Kleidungsstücke. Die derart gebildete Verpackungseinheit wird von der Beschickungseinrichtung 12 übernommen. Die Beschickungseinrichtung 12 überführt die Verpackungseinheit an das Hauptspeicherband 6. Bevor jedoch die erste Verpackungseinheit eines Reinigungsauftrages an das Hauptspeicherband 6 überführt wird, prüft der Prozessor die noch unbelegten Bereiche auf dem Hauptspeicherband 6 ab. Dabei wird ein Bereich des Hauptspeicherbandes 6 ermittelt, welcher die dichtest mögliche Ablage der zu dem Reinigungsauftrag zugehörigen Verpackungseinheiten nebeneinander ermöglicht. Das Hauptspeicherband 6 läuft um, bis der erste Bereithalteplatz 26 dieses ausgewählten Bereiches der Beschickungseinrichtung 12 zugeordnet ist. Dann wird die Verpackungseinheit auf den Bereithalteplatz 26 überführt. Das Band 6 wird weiter bewegt. Ein neuer Bereithalteplatz 26 wird der Beschickungseinrichtung 12 zugeordnet und mit einer weiteren Verpackungseinheit des Reinigungsauftrages belegt. Hierbei wird jeweils ein Reinigungsauftrag, der ein oder mehrere Kleiderbügel umfassen kann, auf den Bereithalteplatz 26 des Hauptspeicherbandes 6 abgehängt. Ein Spreizer 30 fährt hierzu zwischen Bekleidungsstücke, welche benachbart zu dem freien Bereithalteplatz 26 abgehängt sind und drückt diese voneinander weg. Danach wird die Verpackungseinheit auf den freien Bereithalteplatz abgehängt. Zunächst kann die Verpackungseinheit frei aushängen. Erst dann fährt der Spreizer 30 zurück. Die weitere Verpackungseinheit wird seitlich durch die benachbarten Kleidungsstücke geklemmt.

Zur Entnahme der Reinigungsauftrages tritt der Benutzer an die Entnahmestation 4 und gibt sich anhand seiner Kundenkarte zu erkennen. Der Prozessor ermittelt darauf die Position der auf dem Hauptspeicherband 6 abgehängten Verpackungseinheiten zu dem Reinigungsauftrag. Das Hauptspeicherband 6 wird entsprechend zu der Entnahmeöffnung der Entnahmestation 4 verfahren. Die Entnahmeöffnung öffnet sich, sobald auf die Verpackungseinheit eines Kundenauftrages haltender Bereithalteplatz 26 des Hauptspeicherbandes 6 durch die Entnahmeöffnung zugegriffen werden kann. Sofern sämtliche Verpackungseinheiten an nebeneinander angeordneten Bereithalteplätzen 26 des Hauptspeicherbandes 6 hängen, kann die Entnahme der Verpackungseinheiten des Reinigungsauftrages erfolgen, ohne dass die Entnahmeöffnung zwischen der Entnahme einzelner Verpackungseinheiten geschlossen werden müsste.

### Bezugszeichenliste

- 2: Abgabestation
- 4: Entnahmestation
- 6: Hauptspeicherband
- 8: Zwischenablage
- 10: Verpackungsstation
- 12: Beschickungseinrichtung
- 14: Dateneingabeeinrichtung
- 16: Wanne
- 18: Aufnahmeplatz
- 20: Speicherband
- 22: Weiche
- 24: Kommissioniereinrichtung
- 26: Bereithalteplatz
- 28: Kommissionierablage
- 30: Spreizer

## Patentansprüche

1. Vorrichtung zum Abgeben und Entnehmen von Wäschestücken mit einer Abgabestation (2) für Wäschestücke, der eine Dateneingabeeinrichtung (14) zur Eingabe eines Reinigungsauftrages zugeordnet ist,
einer Entnahmestation für Wäschestücke (4) der eine Auftragsidentifikationseinrichtung zugeordnet ist.
einem mit der Dateneingabeeinrichtung (14) und der Auftragsidentifikationseinrichtung verbundenen Prozessor,
einer Zwischenablage (8), auf der gereinigte Wäschestücke umlaufen;
und einer Kommissionioniereinrichtung (24), die eine auf die Zwischenablage (8) zugreifer de Weiche (22) aufweist und mit welcher einzelne gereinigte Wäschestücke von der Zwischenablage (8) zur der Kommissioniereinrichtung (24) überführbar sind,
**dadurch gekennzeichnet,**
**dass** die Abgabestation eine verschließbare Abgabeöffnung zur Abgabe von zu reinigenden Wäschestücken aufweist;
**dass** die Entnahmestation eine verschließbare Entnahmeöffnung für die Entnahme der gereinigten Wäschestücke aufweist,
**dass** ein umlaufendes Hauptspeicherband (6) mit einer Vielzahl von Bereithalteplätzen (26) vorgesehen ist, und die Entnahmestation derart ausgebildet ist, dass diese einen Zugriff auf auf einzelnen Bereithalteplätzen (26) abgelegten Wäschestücken ermöglicht;
**dass** die Zwischenablage (8) durch ein umlaufendes Speicherband (20) mit Aufnahmeplätzen (18) für jeweils eines der gereinigten Wäschestücke gebildet ist;
**dass** die Kommissioniereinrichtung (24) zwischen der Zwischenablage (8) und dem umlaufenden Hauptspeicherband (6) angeordnet ist und ein umlaufendes, in Sektionen unterteiltes Band umfasst, dessen Sektionen jeweils Kommissionierablagen (28) für mehrere gereinigte Wäschestücke bilden
**dass** der Prozessor einen Speicher aufweist, in dem Belegungsbreiten für einzelne Wäschestückarten hinterlegt sind und dass der Prozessor einzelne Wäschestücke eines Reinigungsauftrages eines Kunden für die Ablage in einer einzigen Kommissionisrablage (28) unter Berücksichtigung der jeweiligen Belegungsbreiten der Einzelstücke derart auswählt, dass in der Kommissionierablage (28) durch gesteuerte Betätigung der Weiche (22) möglichst viele Wäschestücke des Reinigungsauftrages des einen Kunden bis zum Erreichen einer maximalen Ablagebreite abgelegt werder, und
**dass** zwischen dem Hauptspeicherband (6) und der Kommissioniereinrichtung (24) eine Beschickungseinrichtung (12) vorgesehen ist, mit der die an einer der Kommissionierablagen (28) zusammengestellten Kleidungsstücke des Reinigungsauftrages des einen Kunden auf einem Bereithalteplatz (26) des Hauptspeicherbandes (6) abgelegt werden.

2. Vorrichtung nach Anspruch 1, **dadurch gekennzeichnet, dass** die Zwischenablage (8) ein umlaufendes Speicherband (20) mit einer Vielzahl von in Umlaufrichtung hintereinander angeordneten Aufnahmeplätzen (18),
eine Überwachungseinrichtung, welche beim Umlaufen des Speicherbandes (20) eine Plausibilitätsprüfung durchführt, bei welcher die Aufnahmeplätze (18) des Speicherbandes (20) gezählt und der ermittelte Wert mit einem hinterlegten Referenzwert verglichen wird,
eine Belegungsprüfeinrichtung, welche die Belegung der Aufnahmeplätze (18) prüft und mit einem hinterlegten Belegungsmuster vergleicht, sowie
eine Kleidungsstückerkennungseinrichtung umfasst, mit welcher ein auf die Zwischenablage (8) abzulegendes Kleidungsstück erkennbar ist, wobei die Überwachungseinrichtung und die Belegungseinrichtung derart zusammenwirken, dass ein von der Kleidungsstückerkennungseinrichtung erzeugtes kleidungsspezifisches Signal einem bestimmten Aufnahmeplatz (18) der Zwischenablage (8) zugeordnet wird.

3. Vorrichtung nach Anspruch 1 oder 2, **dadurch gekennzeichnet, dass** die Überwachungseinrichtung eine Nulllage des Speicherbandes (20) erkennenden Sensor sowie einen das Vorhandensein eines Aufnahmeplatzes (18) erkennenden Sensor umfasst.

4. Vorrichtung nach Anspruch 3, **dadurch gekennzeichnet, dass** der die Nulllage erkennende Sensor sowie der das Vorhandensein eines Aufnahmeplatzes (18) erkennende Sensor ein berührungsfreier, vorzugsweise ein optischer Sensor ist.

5. Vorrichtung nach einem der vorherigen Ansprüche, **dadurch gekennzeichnet, dass** die Belegungsprüfeinrichtung einen das Vorhandensein eines Kleiderbügels in dem Aufnahmeplatz (18) mechanisch erfassenden Sensor aufweist.

6. Vorrichtung nach einem der vorherigen Ansprüche, **gekennzeichnet durch** eine der Kommissioniereinrichtung (24) nachgeordnete Verpackungseinrichtung (10), zum Verpacken von auf einer einzigen Kommissionierablage (28) zu einer Verpackungseinheit zusammengestellten Einzelstücken sowie einer der Verpackungseinrichtung (10) nachgeordneten Beschickungseinrichtung (12), wobei Prozessor derart auf die Hauptspeichereinrichtung (6) einwirkt, dass ein Abschnitt der Hauptspeichereinrichtung (6) an der Beschickungseinrichtung (12) bereitgestellt wird, welcher ein Ablegen sämtlicher Verpackungseinheiten zu einem Reinigungsauftrag in unmittelbarer räumlicher Nähe auf der Hauptspeichereinrichtung (6) erlaubt.

7. Vorrichtung nach Anspruch 6, **dadurch gekennzeichnet, dass** der Prozessor derart auf die Hauptspeichereinrichtung (6) einwirkt, dass ein Abschnitt der Hauptspeichereinrichtung (6) an der Beschickungseinrichtung (12) bereitgestellt wird, der in unmittelbarer räumlicher Nähe zu einem Bereich der Hauptspeichereinrichtung (6) befindlich ist, auf dem bereits ein Reinigungsauftrag desselben Kunden abgelegt ist.

8. Vorrichtung nach einem der vorherigen Ansprüche, **gekennzeichnet durch** eine der Beschickungseinrichtung (12) zugeordnete Spreizeinrichtung (30).

## Claims

1. System for dropping off and picking up items of laundry incorporating
a drop-off station (2) for laundry items co-operating with a data input unit (14) for entering a cleaning order,
a pick-up station for laundry items (4) co-operating with an order identification unit,
a processor connected to the data input unit (14) and the order identification unit,
an intermediate deposit (8) on which the cleaned laundry items circulate
and a commissioning unit (24) with a transfer system (22) accessing the intermediate deposit (8), by means of which individual cleaned laundry items can be transferred from the intermediate deposit (8) to the commissioning unit (24),
**characterised in that**
the drop-off station has a drop-off opening which can be closed, for dropping off laundry items to be cleaned;
the pick-up station has a pick-up opening which can be closed, for picking up the cleaned laundry items,
a circulating main storage belt (6) with a plurality of ready-to-go positions (26) is provided and the pick-up station is designed to permit access to laundry items deposited on individual ready-to-go positions (26);
the intermediate deposit (8) is provided in the form of a circulating storage belt (20) with storage positions (18) for each one of the respective cleaned laundry items;
the commissioning unit (24) is disposed between the intermediate deposit (8) and the circulating main storage belt (6) and comprises a circulating belt sub-divided into sections, the sections of which each constitute commissioning deposits (28) for several cleaned laundry items,
the processor has a memory, in which load widths for individual types of laundry items are stored, and the processor selects individual laundry items from a customer's cleaning order which are deposited in an individual commissioning deposit (28) taking account of the respective load widths of the individual items so that as many laundry items as possible from the customer's cleaning order are deposited in the commissioning deposit (28) by controlled operation of the transfer system (22) until a maximum deposit width is reached and
a feeder unit (12) is disposed between the main storage belt (6) and the commissioning unit (24) by means of which the garments from the cleaning order of one customer assembled on one of the commissioning deposits (28) are deposited in a ready-to-go position (26) on the main storage belt (6) .

2. System as claimed in claim 1, **characterised in that** the intermediate deposit (8) comprises a circulating storage belt (20) with a plurality of receiving positions (18) disposed one after the other in the direction of circulation,
a monitoring unit, which runs a plausibility check as the storage belt (20) circulates, during which the receiving positions (18) of the storage belt (20) are counted and the resultant value is compared with a stored reference value,
a load checking unit, which checks the load of the receiving places (18) and compares it with a stored load pattern, and
a garment detection unit by means of which a garment to be deposited on the intermediate deposit (8) can be identified, which monitoring unit and load checking unit co-operate in such a way that a garment-specific signal generated by the garment detection unit is allocated to a specific receiving position (18) of the intermediate deposit (8).

3. System as claimed in claim 1 or 2, **characterised in that** the monitoring unit has a sensor which detects a zero position of the storage belt (20) and a sensor which detects the presence of a receiving position (18).

4. System as claimed in claim 3, **characterised in that** the sensor detecting the zero position and the sensor detecting the presence of a receiving position (18) are contactless sensors, preferably optical sensors.

5. System as claimed in one of the preceding claims, **characterised in that** the load checking unit has a sensor which mechanically detects the presence of a garment hanger in the receiving position (18).

6. System as claimed in one of the preceding claims, **characterised by** a packing unit (10) disposed downstream of the commissioning unit (24) for packing individual items assembled on a single commissioning deposit (28) into a packaged unit and a feeder unit (12) disposed downstream of the packing unit (10), the processor acting on the main storage unit (6) in such a way that a section of the main storage unit (6) is moved alongside the feeder unit (12), which enables all packaged units of a cleaning order to be assembled immediately adjacent to one another on the main storage unit (6).

7. System as claimed in claim 6, **characterised in that** the processor acts on the main storage unit (6) in such a way that a section of the main storage unit (6) is moved alongside the feeder unit (12), which is disposed in the immediate vicinity of an area of the main storage unit (6) on which a cleaning order of the same customer is deposited.

8. System as claimed in one of the preceding claims, **characterised by** a spacer unit (30) co-operating with the feeder unit (12).

## Revendications

1. Dispositif pour déposer et retirer du linge, comprenant
- un poste de dépôt (2) pour le linge, auquel est associé un appareil d'entrée de données (14) pour entrer un ordre de nettoyage,
- un poste de retrait pour du linge (4) auquel est associé un appareil d'identification d'ordre,
- un processeur qui est relié à l'appareil d'entrée de données (14) et à l'appareil d'identification d'ordre,
- un espace de rangement provisoire (8) sur lequel circule le linge nettoyé,
- et un appareil de préparation des commandes (24) qui comporte un aiguillage (22) accédant à l'espace de rangement provisoire (8) et à l'aide duquel des articles nettoyés individuels peuvent être transférés dudit espace (8) vers l'appareil de préparation des commandes (24),
**caractérisé**
- **en ce que** le poste de dépôt présente une ouverture de dépôt apte à être fermée, pour le dépôt de linge à nettoyer,
- **en ce que** le poste de retrait présente une ouverture de retrait apte à être fermée, pour le retrait du linge nettoyé,
- **en ce qu'**il est prévu une bande de stockage principale rotative (6) avec une multiplicité d'emplacements pour linge prêt (26), et en ce que le poste de retrait est conçu pour permettre d'accéder au linge déposé sur les emplacements (26) individuels,
- **en ce que** l'espace de rangement provisoire (8) est formé par une bande de stockage rotative (20) avec des compartiments (18) pour chaque article nettoyé,
- **en ce que** l'appareil de préparation des commandes (24) est disposé entre l'espace de rangement provisoire (8) et la bande de stockage principale rotative (6) et comprend une bande rotative, divisée en sections, dont les sections forment des compartiments de préparation des commandes (28) pour plusieurs articles nettoyés,
- **en ce que** le processeur comporte une mémoire dans laquelle sont stockées des largeurs d'occupation pour les différents types de linge et en ce que le processeur choisit des articles individuels d'un ordre de nettoyage d'un client pour les déposer dans un seul compartiment (28) en tenant compte de la largeur d'occupation de chaque article de telle sorte que grâce à un actionnement commandé de l'aiguillage (22), un maximum d'articles de l'ordre de nettoyage d'un client soient déposés dans le compartiment de préparation des commandes (28), jusqu'à ce qu'une largeur de dépôt maximale soit atteinte, et
- **en ce qu'**il est prévu entre la bande de stockage principale (6) et l'appareil de préparation des commandes (24) un appareil de chargement (12) grâce auquel les articles de l'ordre de nettoyage d'un client réunis dans l'un des compartiments de préparation des commandes (28) sont placés sur un emplacement pour linge prêt (26) de la bande de stockage principale (6).

2. Dispositif selon la revendication 1, **caractérisé en ce que** l'espace de rangement provisoire (8) comprend
- une bande de stockage rotative (20) avec une multiplicité de compartiments (18) disposés les uns derrière les autres dans le sens de circulation,
- un appareil de surveillance qui effectue lors de la circulation de la bande de stockage (20) un contrôle de plausibilité qui compte les compartiments (18) de la bande de stockage (20) et qui compare la valeur déterminée à une valeur de référence mise en mémoire,
- un appareil de contrôle d'occupation qui contrôle l'occupation des compartiments (18) et la compare à un modèle d'occupation mis en mémoire, et
- un appareil de reconnaissance de vêtements à l'aide duquel un vêtement à poser dans l'espace de rangement provisoire (8) peut être reconnu, l'appareil de surveillance et l'appareil d'occupation coopérant de telle sorte qu'un signal propre aux vêtements généré par l'appareil de reconnaissance de vêtements soit affecté à un compartiment (18) défini de l'espace de rangement provisoire (8).

3. Dispositif selon la revendication 1 ou 2, **caractérisé en ce que** l'appareil de surveillance comprend un capteur qui détecte une position nulle de la bande de stockage (20) et un capteur qui détecte la présence d'un compartiment (18).

4. Dispositif selon la revendication 3, **caractérisé en ce que** le capteur qui détecte la position nulle et le capteur qui détecte la présence d'un compartiment (18) sont constitués par un capteur sans contact, de préférence un capteur optique.

5. Dispositif selon l'une des revendications précédentes, **caractérisé en ce que** l'appareil de contrôle d'occupation comporte un capteur qui détecte mécaniquement la présence d'un cintre dans le compartiment (18).

6. Dispositif selon l'une des revendications précédentes, **caractérisé par** un appareil d'emballage (10) disposé en aval de l'appareil de préparation des commandes (24) et destiné à emballer le linge réuni en un lot d'emballage sur un seul compartiment de préparation des commandes (28), et par un appareil de chargement (12) disposé en aval de l'appareil d'emballage (10), le processeur agissant sur l'appareil de stockage principal (6) de manière à mettre à la disposition de l'appareil de chargement (12) une section dudit appareil de stockage principal (6) qui permet de déposer tous les lots d'emballage correspondant à un ordre de nettoyage à proximité immédiate, dans l'espace, sur ledit appareil de stockage principal (6).

7. Dispositif selon la revendication 6, **caractérisé en ce que** le processeur agit sur l'appareil de stockage principal (6) de manière à mettre à la disposition de l'appareil de chargement (12) une section dudit appareil de stockage principal (6) qui se trouve à proximité immédiate, dans l'espace, d'une zone de l'appareil de stockage principal (6) sur laquelle un ordre de nettoyage du même client est déjà déposé.

8. Dispositif selon l'une des revendications précédentes, **caractérisé par** un appareil d'écartement (30) associé à l'appareil de chargement (12).
